# DEMANDE DE BREVET EUROPEEN

(11) **EP 4 782 223 A1**
(43) Date de publication de la demande: **29.07.2026**
(21) Numéro de dépôt: 25226394.2
(22) Date de dépôt: 22.12.2025
(51) Int. Cl.: B60B 3/04, B60B 3/10, B60B 21/10

(54) **ROUE À JANTE À CROCHET USINÉ, POUR UN VÉHICULE TERRESTRE**

(30) Priorité: 22.01.2025 FR 2500628
(71) Demandeur: Stellantis Auto SAS, 78300 Poissy (FR); MW Italia S.r.l., 10098 Rivoli (TO) (IT)
(72) Inventeur: PALPACUER, ERIC, 75013 PARIS (FR); NUBOER, ROBERT, 91190 AUBIN (FR); BOUCHET, CHRISTOPHE, 91120 PALAISEAU (FR); GOTTA, Giacomo, 10098 Rivoli (IT); GALLIO, Giorgio, 10098 Rivoli (IT); ZANOLLI, Emanuele, 10098 RIVOLI (IT); ASTEGIANO, Fabio, 10098 RIVOLI (IT); RONCO, Davide, 10098 RIVOLI (IT)
(74) Mandataire: BCIP

(57) **Abrégé**

Une roue (RV) équipe un véhicule terrestre et comprend une jante (JR) centrée sur un axe de rotation et comprenant un rebord externe (RE) maintenant un flanc de pneumatique et comportant un crochet (CR) ouvert radialement vers l'axe de rotation et présentant une extrémité externe (EE) opposée au flanc de pneumatique et se terminant par une face externe (FE) contenue dans un plan sensiblement perpendiculaire à l'axe de rotation et résultant d'un usinage réalisé après une étape de dépôt d'au moins une couche de peinture et la rendant réfléchissante.

## Description

### Domaine technique de l'invention

L'invention concerne les véhicules terrestres à roues, et plus précisément les roues de tels véhicules terrestres.

### Etat de la technique

Certains véhicules terrestres, par exemple de type automobile, comprennent des roues comportant une jante (de forme générale cylindrique) centrée sur un axe de rotation et sur laquelle est monté un pneumatique, et un voile rapporté et généralement muni d'ajourages et logé fixement à l'intérieur de la jante en étant centré sur l'axe de rotation.

Dans ce type de roue, la jante comprend un rebord externe (orienté vers l'extérieur) qui est propre à maintenir un flanc du pneumatique et qui comporte un crochet ouvert radialement vers l'axe de rotation. On comprendra que c'est ce crochet qui permet de maintenir le flanc du pneumatique.

Habituellement, ce crochet présente une extrémité externe opposée au flanc de pneumatique et s'étendant sensiblement radialement, plus ou moins, en direction de l'axe de rotation de la roue. En raison de cette extension sensiblement radiale, la face externe qui termine l'extrémité externe du crochet est contenue dans un plan qui est sensiblement parallèle à l'axe de rotation de la roue, et donc ne peut pas réfléchir la lumière des phares des autres véhicules, ce qui l'empêche de participer à la sécurité des passagers de son propre véhicule comme des passagers des autres véhicules. La situation est d'ailleurs presque toujours aggravée par l'étape de dépôt d'au moins une couche de peinture (par exemple par cataphorèse) que subit la jante et qui permet notamment de la protéger contre la corrosion, car cette étape donne une couleur noire au crochet (y compris sa face externe), ce qui rend cette dernière encore moins réfléchissante.

L'invention a donc notamment pour but d'améliorer la situation.

### Présentation de l'invention

Elle propose notamment à cet effet une roue propre à équiper un véhicule terrestre et comprenant une jante centrée sur un axe de rotation et comprenant un rebord externe propre à maintenir un flanc de pneumatique et comportant un crochet ouvert radialement vers l'axe de rotation et présentant une extrémité externe propre à être opposée au flanc de pneumatique.

Cette roue se caractérise par le fait que l'extrémité externe du crochet se termine par une face externe qui est contenue dans un plan sensiblement perpendiculaire à l'axe de rotation et qui résulte d'un usinage réalisé après une étape de dépôt d'au moins une couche de peinture et la rendant réfléchissante.

Grâce à cette orientation particulière de la face externe et de son caractère réfléchissant, elle peut désormais réfléchir la lumière des phares des autres véhicules, et donc participer à la sécurité des passagers de son propre véhicule comme des passagers des autres véhicules.

La roue selon l'invention peut comporter d'autres caractéristiques qui peuvent être prises séparément ou en combinaison, et notamment :
- la face externe de l'extrémité externe du crochet peut être contenue dans un plan perpendiculaire à l'axe de rotation ;
- la face externe de l'extrémité externe du crochet peut présenter un aspect à facettes multiples (ou dit « diamanté ») ;
- l'extrémité externe peut comprendre une extension s'étendant en direction de l'axe de rotation suivant une direction sensiblement radiale, sensiblement perpendiculaire à cet axe de rotation, et prolongeant la face externe ;
- la jante peut être réalisée en tôle d'aluminium ;
- elle peut comprendre un voile logé fixement à l'intérieur de la jante en étant centré sur l'axe de rotation ;
- en présence de la dernière option, le voile peut être en tôle d'acier.

L'invention propose également un véhicule terrestre comprenant au moins deux roues du type de celle présentée ci-avant.

Par exemple, ce véhicule terrestre peut comprendre quatre roues, et peut être de type automobile.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue de face, un exemple de réalisation d'une roue selon l'invention, avant qu'elle reçoive un pneumatique et qu'elle équipe un véhicule terrestre,
[Fig. 2] illustre schématiquement, dans une vue en coupe dans un plan transversal et vertical, une partie de la roue de la figure 1,
[Fig. 3] illustre schématiquement, dans une vue en coupe dans un plan transversal et vertical, une partie du rebord de la jante de la roue des figures 1 et 2, et
[Fig. 4] illustre schématiquement, dans une vue en coupe dans un plan transversal et vertical, une partie d'une variante du rebord de la jante de la roue des figures 1 et 2, dans laquelle l'extrémité externe du crochet comprend une extension sensiblement radiale.

### Description détaillée de l'invention

L'invention a notamment pour but de proposer une roue RV destinée à équiper un véhicule terrestre, et comprenant une jante JV à crochet CR usiné.

Dans ce qui suit, on considère, à titre d'exemple non limitatif, que le véhicule terrestre est de type automobile. Il s'agit par exemple d'une voiture. Mais l'invention n'est pas limitée à ce type de véhicule terrestre à roues. Elle concerne en effet tout véhicule terrestre comprenant au moins deux roues.

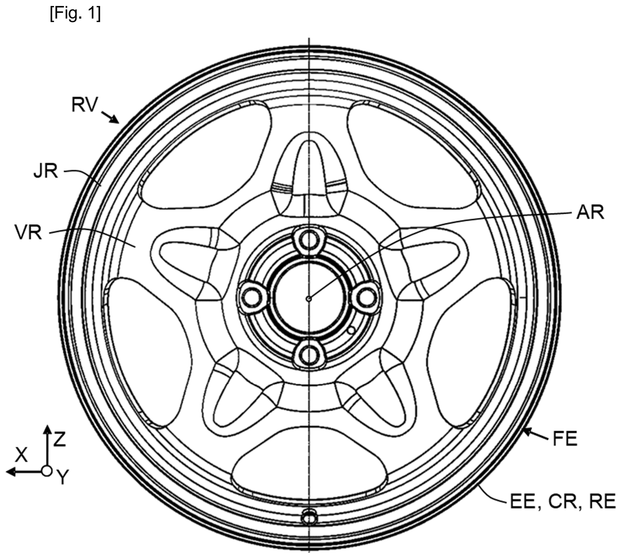

Sur les figures 1 à 4 la direction X est destinée à être parallèle à la direction longitudinale du véhicule (terrestre), laquelle est sensiblement parallèle aux côtés latéraux (ou longitudinaux) comportant les portières latérales, la direction Y est destinée à être parallèle à la direction transversale du véhicule, laquelle est perpendiculaire à la direction longitudinale X, et la direction Z est destinée à être parallèle à la direction verticale du véhicule, laquelle est perpendiculaire aux directions longitudinale X et transversale Y.

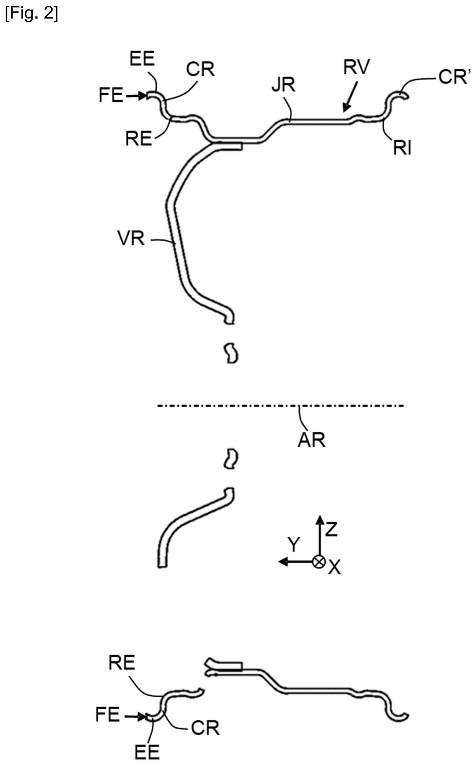

On a schématiquement illustré au moins partiellement sur les figures 1 et 2 un exemple de roue RV destinée à équiper un véhicule terrestre et comprenant une jante JR et un voile VR.

La jante JR est de forme générale cylindrique, centrée sur un axe de rotation AR et propre à recevoir un pneumatique (non illustré). Le voile VR est logé fixement à l'intérieur de la jante JV en étant centré sur l'axe de rotation AR. Par exemple, le voile VR peut être solidarisé fixement à la jante JV par soudage, et est destiné à être solidarisé à un moyeu, comme par exemple un porte-fusée du véhicule.

Par ailleurs, la jante JV comprend un rebord externe RE qui est propre à maintenir un flanc du pneumatique et qui comporte un crochet CR ouvert radialement vers l'axe de rotation AR. On notera, comme cela apparaît sur la figure 2, que la jante JV comprend aussi un rebord interne RI opposé au rebord externe RE, propre à maintenir l'autre flanc du pneumatique et comportant un crochet CR' ouvert radialement vers l'axe de rotation AR, mais qui n'est pas concerné par l'invention.

Ce crochet CR présente une extrémité externe EE qui est propre à être opposée au flanc du pneumatique, et qui se termine par une face externe FE contenue dans un plan sensiblement perpendiculaire à l'axe de rotation AR et résultant d'un usinage qui est réalisé après une étape de dépôt d'une couche de peinture (par exemple par cataphorèse) de la jante JV et qui la rend réfléchissante.

On comprendra que cet usinage est notamment destiné à supprimer une partie de l'extrémité externe EE qui s'étendait sensiblement radialement en direction de l'axe de rotation AR afin de créer la face externe FE sensiblement perpendiculaire à cet axe de rotation AR pour la rendre entièrement visible par une personne placée devant. En outre, cet usinage permet de supprimer la couche anti-corrosion de couleur noire résultant de l'étape de dépôt d'au moins une couche de peinture (par exemple par cataphorèse) et ainsi de rendre la face externe FE réfléchissante. On notera que l'on peut aussi envisager de réaliser directement la jante JV avec sa forme finale (c'est-à-dire sans que l'extrémité externe EE de son rebord externe RE ne s'étende radialement en direction de l'axe de rotation AR et avec la face externe FE sensiblement perpendiculaire à l'axe de rotation AR). Dans ce cas, l'usinage est destiné à supprimer la couche anti-corrosion de couleur noire résultant de l'étape de dépôt d'au moins une couche de peinture (par exemple par cataphorèse) et à rendre la face externe FE réfléchissante.

En raison de l'orientation particulière de la face externe FE et de son caractère réfléchissant, la face externe FE peut désormais réfléchir la lumière des phares des autres véhicules, et ainsi participer à la sécurité des passagers de son propre véhicule comme des passagers des autres véhicules.

On notera que l'agencement de la face externe FE permet aussi de donner l'impression que le diamètre de la roue RV est plus grand que son diamètre réel.

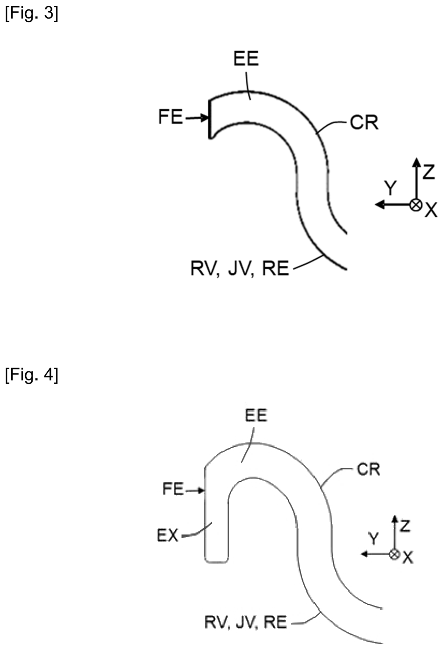

Par exemple, et comme illustré non limitativement sur les figures 2 et 3, la face externe FE peut être contenue dans un plan XZ perpendiculaire à l'axe de rotation AR. Cela favorise la réflexion de la lumière issue d'un véhicule vers ce dernier. Mais la face externe FE pourrait présenter une très légère inclinaison par rapport au plan XZ perpendiculaire à l'axe de rotation AR, et par exemple comprise entre +/-1° et +/-5° (d'où le mot « sensiblement » utilisé plus haut).

Egalement par exemple, la face externe FE peut présenter un aspect à facettes multiples, également dit « diamanté », de manière à la rendre encore plus réfléchissante. On comprendra que cet aspect diamanté est obtenu lors de l'usinage post-dépôt d'au moins une couche de peinture (par exemple post-cataphorèse). On notera également que cet aspect diamanté améliore l'esthétique de la roue RV.

Egalement par exemple, et comme illustré non limitativement sur la figure 4, l'extrémité externe EE peut comprendre une extension EX qui s'étend en direction de l'axe de rotation AR suivant une direction qui est sensiblement radiale, et donc sensiblement perpendiculaire à cet axe de rotation AR. Dans ce cas, l'extension EX prolonge la face externe FE sensiblement radialement. On comprendra que cette extension EX est obtenue par usinage, du fait qu'elle fait partie de l'extrémité externe EE. Cette option permet avantageusement d'augmenter la surface de la face externe FE et ainsi d'augmenter sa visibilité et sa capacité de réflexion.

Egalement par exemple, la jante JR peut être réalisée en tôle d'aluminium (et donc en alliage d'aluminium). Cela est particulièrement avantageux, car cela permet de réduire notablement la masse de la jante JV, et donc le coût de cette dernière (JV), mais aussi d'améliorer son impact sur l'émission pendant la phase d'utilisation du véhicule. En outre, la suppression des masses de la jante JR se traduira par une amélioration des fréquences dynamiques de la roue et, ainsi, aura un impact positif sur les performances dites NVH (« Noise Vibration Harshness » - dureté, vibrations et bruit).

Mais la jante JR pourrait être réalisée en tôle d'acier. D'une manière générale, les tôles peuvent être embouties, expansées, roulées/repoussées, assemblées et usinées.

Egalement par exemple, le voile VR peut être en tôle d'acier.

On notera que lorsque la jante JR est en tôle d'aluminium et le voile VR en tôle d'acier, on dispose d'une roue hybride qui peut éventuellement recevoir un enjoliveur.

## Revendications

1. Roue (RV) propre à équiper un véhicule terrestre et comprenant une jante (JR) centrée sur un axe de rotation et comprenant un rebord externe (RE) propre à maintenir un flanc de pneumatique et comportant un crochet (CR) ouvert radialement vers ledit axe de rotation et présentant une extrémité externe (EE) propre à être opposée audit flanc de pneumatique, **caractérisée en ce que** ladite extrémité externe (EE) se termine par une face externe (FE) contenue dans un plan sensiblement perpendiculaire audit axe de rotation et résultant d'un usinage réalisé après une étape de dépôt d'au moins une couche de peinture et la rendant réfléchissante.

2. Roue selon la revendication 1, **caractérisée en ce que** ladite face externe (FE) est contenue dans un plan perpendiculaire audit axe de rotation.

3. Roue selon la revendication 1 ou 2, **caractérisée en ce que** ladite face externe (FE) présente un aspect à facettes multiples.

4. Roue selon l'une des revendications 1 à 3, **caractérisée en ce que** ladite extrémité externe (EE) comprend une extension (EX) s'étendant en direction dudit axe de rotation suivant une direction sensiblement radiale, sensiblement perpendiculaire audit axe de rotation, et prolongeant ladite face externe (FE).

5. Roue selon l'une des revendications 1 à 4, **caractérisée en ce que** ladite jante (JR) est réalisée en tôle d'aluminium.

6. Roue selon l'une des revendications 1 à 5, **caractérisée en ce qu'**elle comprend un voile (VR) logé fixement à l'intérieur de ladite jante (JR) en étant centré sur ledit axe de rotation.

7. Roue selon la revendication 6, **caractérisée en ce que** ledit voile (VR) est en tôle d'acier.

8. Véhicule terrestre, **caractérisé en ce qu'**il comprend au moins deux roues (RV) selon l'une des revendications 1 à 7.

9. Véhicule terrestre selon la revendication 8, **caractérisé en ce qu'**il comprend quatre roues (RV).

10. Véhicule terrestre selon la revendication 8 ou 9, **caractérisé en ce qu'**il est de type automobile
